# EUROPEAN PATENT SPECIFICATION

(11) **EP 1 857 230 B1**
(45) Date of publication and mention of the grant of the patent: **22.10.2008**
(21) Application number: 07707156.1
(22) Date of filing: 22.01.2007
(51) Int. Cl.: B25J 17/02, B25J 15/00

(54) **JOINT STRUCTURE OF ROBOT**
GELENKSTRUKTUR EINES ROBOTERS
STRUCTURE D'ARTICULATION DE ROBOT

(30) Priority: 01.02.2006 JP 2006024289
(43) Date of publication of application: 21.11.2007
(73) Proprietor: Honda Motor Co., Ltd., Tokyo 107-8556 (JP)
(72) Inventor: TAKEMURA, Yoshinari, Wako-shi, Saitama 351-0193 (JP)
(74) Representative: Herzog, Markus
(86) International application number: PCT/JP2007/050893
(87) International publication number: WO 2007/088743

(56) References cited:
- JP-A- 10 086 090
- JP-A- 10 133 733
- JP-A- 60 255 377
- JP-A- 2003 069 333
- US-A- 4 805 477

## Description

### FIELD OF THE INVENTION

The present invention relates to a joint structure of a robot, more specifically, to a joint structure thereof having a wide movable range.

### BACKGROUND ART

A joint structure of a wrist of a robot is known which includes a motor, a feed screw mechanism, or the like to achieve a longitudinal swing motion and a lateral swing motion. For example, Japanese Laid-Open Patent Application, Publication No. 2003-170381 (paragraphs 0005-0007, FIG. 1) discloses a joint structure of a wrist of a humanoid robot. In the joint structure, a feed screw converts a rotational motion of a motor into a linear motion; and a moving block which operates in the linear motion is coupled to a hand via a universal joint, to thereby enable the longitudinal swing motion or lateral swing motion of the wrist.

As a link mechanism which ensures a two-degree-of-freedom motion with respect to a longitudinal shaft and a lateral shaft as described above, a gimbal mechanism with two axes provided crosswise, and a universal joint have been known.

However, the feed screw mechanism disclosed in Japanese Laid-Open Patent Application, Publication No. 2003-170381 has such problems as follows. If motion angles of the longitudinal swing motion and the lateral swing motion of an arm are set wider, a stroke of the feed screw as well as a length of the arm itself have to be longer. This restricts designing of the arm. A burden applied to the motor is also increased due to an increase in inertia moment of the arm. Further, because the feed screw receives a load applied to the mechanism, there is concern about its load resistance for use in the joint structure of a robot.

Another problem is that, if the motion angles are set wider, because a rotational angle of a link itself of the joint inevitably becomes larger, the link of the joint, or a cover or the like interlocking with the link interferes with internal components in the link, such as a motor. This results in obstruction of motions of the joint.

On the other hand, if the gimbal mechanism is used, a link in a longitudinal swing motion direction and that in a lateral swing motion direction interfere with each other, to thereby restrict its movable range. Thus a larger gimbal link is required, which is not necessarily suited for use as a link of the joint structure of a robot.

A further joint mechanism of a robot wrist is known from US-A-4805477 for performing longitudinal and lateral swing motions of a coupled body, the joint structure comprising a base link, a gimbal link, a main link and a sub link to form a four link mechanism which allows an amplified angular movement of the coupled body in respect to the angular movement imported by the driving mechanism to the gimbal link and to the main link.

### DISCLOSURE OF THE INVENTION

To solve the problems in the above-mentioned conventional technology, the present inventor has made research and development to finally achieve the present invention. Namely, an aspect of the present invention is to provide a compact joint structure of a robot, while a wide movable angle of a joint thereof is ensured.

More specifically, the present invention relates to a joint structure of a robot for performing a longitudinal swing motion and a lateral swing motion of a coupled body, using a drive mechanism, with respect to a robot link for use in the joint structure of the robot. The joint structure includes: a base link as a main body of the robot link having a pair of facing portions; a gimbal link having first and second rotational shafts which are not parallel to each other so as to provide the longitudinal swing motion and lateral swing motion of the coupled body, the first rotational shaft being supported between the pair of facing portions; a main link with one end thereof coupled to the second rotational shaft of the gimbal link and with the other end thereof coupled to the coupled body; and a sub link with one end thereof coupled to the gimbal link and with the other end thereof coupled to the coupled body, the sub link being provided crosswise with the main link to form a four link mechanism therewith.

The term "a coupled body" used herein means a coupled member such as a hand and an arm, which is coupled to the robot link via a joint. The coupled body includes not only a terminal member coupled to a link but also an intermediate member such as a link itself. The expression "two rotational shafts not parallel to each other" used herein means that the two rotational shaft intersect with each other in the same plane, or intersect not in the same plane but do so when viewed from above.

In the above configuration, the robot link and the gimbal link are rotatably coupled by the first rotational shaft; the gimbal link and the coupled body are rotatably coupled by the second rotational shaft; and the first rotational shaft and the second rotational shaft are provided not being parallel to each other. A rotational motion about the first rotational shaft and that about the second rotational shaft are combined, so that the longitudinal swing motion and the lateral swing motion of the coupled body can be freely performed with respect to the robot link.

Further, the gimbal link and the coupled body are coupled with the four link mechanism, in which the main link and the sub link are provided crosswise. Thus, in the rotational direction of the gimbal link about the second rotational shaft, the coupled body during its swing motion in a certain direction is swung to tilt further in the direction.

That is, in the rotational direction of the gimbal link about the second rotational shaft, a swing angle (a tilt angle) of the coupled body is larger than the rotational angle of the main link. Even with a smaller rotation of the main link, the coupled body swings (tilts) to a larger extent.

The rotational angle of the main link is therefore minimized, and interference between the main link in a rotational motion and the internal components is prevented. Thus, a compact joint structure of a robot is realized, while a large swing angle of the coupled body is ensured. Additionally, while the coupled body is being moved in a direction, a swing speed of the coupled body is increased in the direction, to thereby tilt further in the direction. The joint structure hence moves and responds quickly.

In the joint structure of a robot according to the present invention, the first rotational shaft may be configured to be a longitudinal shaft serving as a rotational shaft for the lateral swing motion of the coupled body. The second rotational shaft may be configured to be a lateral shaft serving as a rotational shaft for the longitudinal swing motion of the coupled body. The lateral shaft is herein provided in a direction orthogonal to the longitudinal shaft.

In the above configuration, the longitudinal shaft, which is the first rotational shaft, and the lateral shaft, which is the second rotational shaft, are provided orthogonally to each other. Thus a rotational motion about the longitudinal shaft and that about the lateral shaft are suitably combined, and are controlled easily.

In a configuration of the joint structure of a robot according to the present invention, the robot may be a humanoid robot. The robot link may be a link of an arm of the humanoid robot. The arm is between its elbow and its wrist. The coupled body may be a hand of the robot. The hand is between its wrist and its finger tips. A swing direction of the longitudinal swing motion may be directions in which a palm of the hand and a back of the hand are faced.

In the above configuration, the swing direction of the longitudinal swing motion is the directions in which the palm of the hand and the back of the hand are faced. This enables a larger swing angle of the longitudinal swing motion of the robot. A human wrist also has a larger swing angle in a direction of the longitudinal swing motion than in a direction of the lateral swing motion. Thus, such a motion of the wrist of the robot more looks like that of a human.

In the longitudinal swing motion direction, the swing angle of the hand is larger than the rotational angle of the main link. This means that, even with a smaller rotation of the main link, the hand swings to a greater extent. Therefore, interference between the main link during its rotational motion and the internal components is prevented, and a compact joint structure of the wrist is realized, while ensuring a large swing angle of the coupled body.

In a configuration of the present invention, the main link may be longer than the sub link. And the hand is coupled to the arm link, such that the main link is fixed to a palm side of the hand, and the sub link is fixed to a back side of the hand.

In the above configuration, a length of the main link is different from that of the sub link. Therefore, interference between the two links is prevented, while ensuring a large rotational angle of the links. Also in the above configuration, a swing angle of the hand is larger on the palm side of the hand than on the back side thereof. This allows a quick motion of the hand. A compact and more-human-like joint structure of the wrist can also be realized.

The main link in the present invention may have a configuration as follows. The main link spans both sides of the longitudinal shaft. A first rod and a second rod for pivoting the main link in a direction for the longitudinal swing motion and in a direction for the lateral swing motion are coupled to the main link via respective adjustable joints. The first rod is coupled to the main link in a different position from the lateral shaft, and, on one side of the longitudinal shaft, in a different position from the longitudinal shaft. The second rod is coupled to the main link in the different position from the lateral shaft, and, on the other side of the longitudinal shaft, in the different position from the longitudinal shaft.

The main link in the present invention may have another configuration as follows. The main link spans both sides of the lateral shaft. The first rod and the second rod for pivoting the main link in the longitudinal swing motion direction and in the lateral swing motion direction are coupled to the main link via respective adjustable joints. The first rod is coupled to the main link in a different position from the longitudinal shaft, and, on one side of the lateral shaft, in a different position from the lateral shaft. The second rod is coupled to the main link in the different position from the longitudinal shaft, and, on the other side of the lateral shaft, in the different position from the lateral shaft.

In either of the above configurations, the first rod and the second rod are coupled via the adjustable joints to the main link in the different positions from the longitudinal shaft and the lateral shaft, respectively. Thus, the main link can be rotated about the longitudinal shaft and the lateral shaft, when the first rod and the second rod are moved forward or backward.

Additionally, when the first rod and the second rod each coupled to the main link are coordinatedly moved forward or backward, the longitudinal swing motion and the lateral swing motion are performed in a balanced and smooth way.

In the present invention, a line is assumed to connect between a first coupling point, at which the first rod is coupled to the main link, and a second coupling point, at which the second rod is coupled to the main link. The line connecting the two points is preferably parallel to the longitudinal shaft or the lateral shaft. And, the first coupling point and the second coupling point are preferably at equal distances from the longitudinal shaft and the lateral shaft, respectively.

In the above configuration, the first rod and the second rod are parallel to each other with respect to the longitudinal shaft or the lateral shaft, and the first coupling point and the second coupling point are at equal distances from the longitudinal shaft and the lateral shaft, respectively. Thus, the main link can be rotated about the longitudinal shaft or the lateral shaft, by moving forward or backward the first rod and the second rod by the same distances, or by moving forward any one of the first rod and the second rod by a predetermined distance, and moving the other backward by the same distance.

Hence, the motions in the longitudinal swing direction and the lateral swing motion direction can be performed by coordinating and synchronizing the first rod and the second rod. This ensures smooth and easily controllable motions.

In the present invention, the gimbal link may have a configuration as follows. A longitudinal shaft portion serving as the longitudinal shaft and a lateral shaft portion serving as the lateral shaft are provided in a cross shape. A ring portion is provided with a through hole in a middle portion in the cross shape. The longitudinal shaft portion and the lateral shaft portion protrude each to the outside of the ring portion.

In the above configuration, the gimbal link has the through hole in the middle portion in the cross shape. This allows a harness, hydraulic and pneumatic piping, or the like to run through the center of the robot link. When the joint of the robot is moved, the harness or the like does not obstruct motions of the joint, thus ensuring a wide movable angle of the joint. Further, an excessive load applied on the harness can be prevented, thus avoiding possible disconnection of the harness.

In a configuration of the present invention, the first rod may be coupled to a first motor included in the drive mechanism via an adjustable joint, and a second rod may be coupled to a second motor also included in the drive mechanism via another adjustable joint.

In the above configuration, the two motors are coordinatedly operated so as to perform the longitudinal swing motion and the lateral swing motion. This allows the motors to be downsized, and the robot link to be made more compact. Further, the adjustable joints have aligning functions to smoothly convert a linear motion into a rotational motion.

In a further configuration of the present invention, the hand is coupled to the arm link, such that a plane formed by the palm of the hand is substantially parallel to a plane formed by the first rod and the second rod, in a position where the hand is straight to the arm link.

In the above configuration, the hand is coupled to the arm link, such that the plane formed by the palm is parallel to the plane formed by the first rod and the second rod. This facilitates a correspondence between a travel distance of each of the rods and a position of the hand, thus making a control over the motions of the hand easier.

### BRIEF DESCRIPTION OF THE DRAWINGS

[FIG. 1] A perspective view showing a general configuration of a joint structure of a robot according to an embodiment of the present invention.
[FIG. 2] An exploded perspective view showing a key portion of FIG. 1 according to the embodiment of the present invention.
[FIG. 3] An exploded perspective view for explaining how components of the joint structure of the robot are coupled according to the embodiment of the present invention.
[FIG. 4] A partially enlarged perspective view for explaining a lateral swing mechanism of the joint structure of the robot, when viewed from above, according to the embodiment of the present invention.
[FIG. 5] Side views each for explaining a longitudinal swing motion in the four link mechanism according to the embodiment of the present invention. FIG. (a) shows a state where a hand is swung toward a back of the hand. FIG. (b) shows a state where the hand is straight with respect to the arm link. FIG. (c) shows a state where the hand is swung toward a palm of the hand.
[FIG. 6] Side views each showing the hand which is swung 90 degrees from the state of FIG. 5. FIG. (a) is a state where the hand is swung toward the back of the hand. FIG. (b) is a state where the hand is swung toward the palm of the hand.
[FIG. 7] Plan views each for explaining a lateral swing motion in the four link mechanism according to the embodiment of the present invention. FIG. (a) shows a state where the hand is swung in a counterclockwise direction with respect to the plane of this figure. FIG. (b) shows a state where the hand is straight with respect to the arm link. FIG. (c) shows a state where the hand is swung in a clockwise direction with respect to the plane of this figure.

### BEST MODE FOR CARRYING OUT THE INVENTION

An embodiment of the present invention is described next in detail with reference to the related drawings according to the necessity.

In the embodiment, the joint structure of a robot according to the present invention is assumed to be a joint structure of a wrist of a humanoid robot. However, the present invention is not limited to this. The present invention may be applied to an ankle joint of a humanoid robot, a connecting part of a link of an industrial robot, or the like.

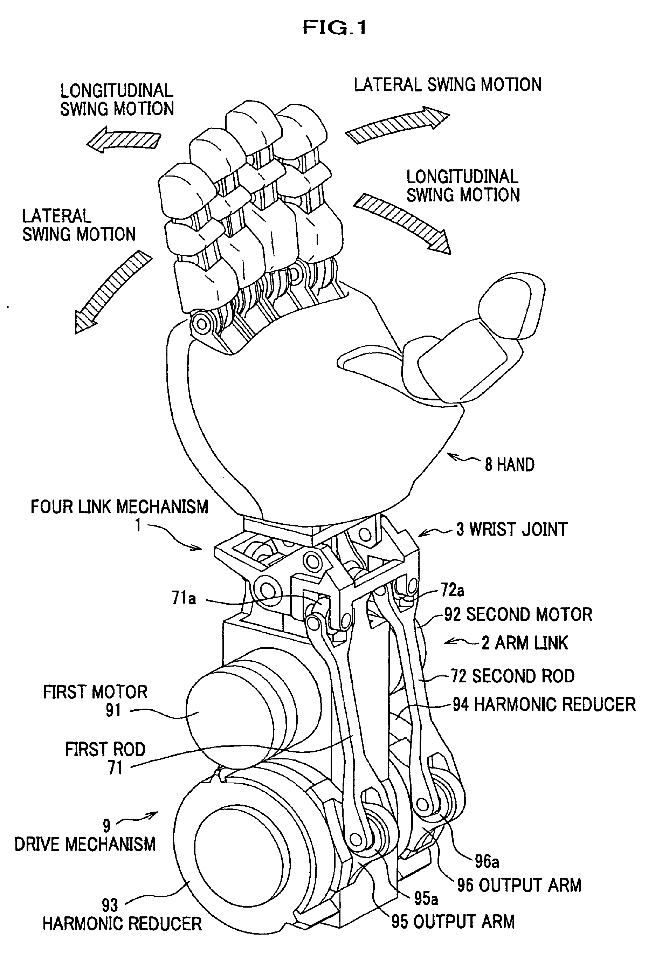

The joint structure of the wrist of the humanoid robot according to the embodiment of the present invention includes, as shown in FIG. 1, an arm link 2 which is a robot link; a wrist joint 3 coupled to the arm link 2; a hand 8 which is a coupled body coupled to the wrist joint 3; and a drive mechanism 9 for performing longitudinal and lateral swing motions of the hand 8.

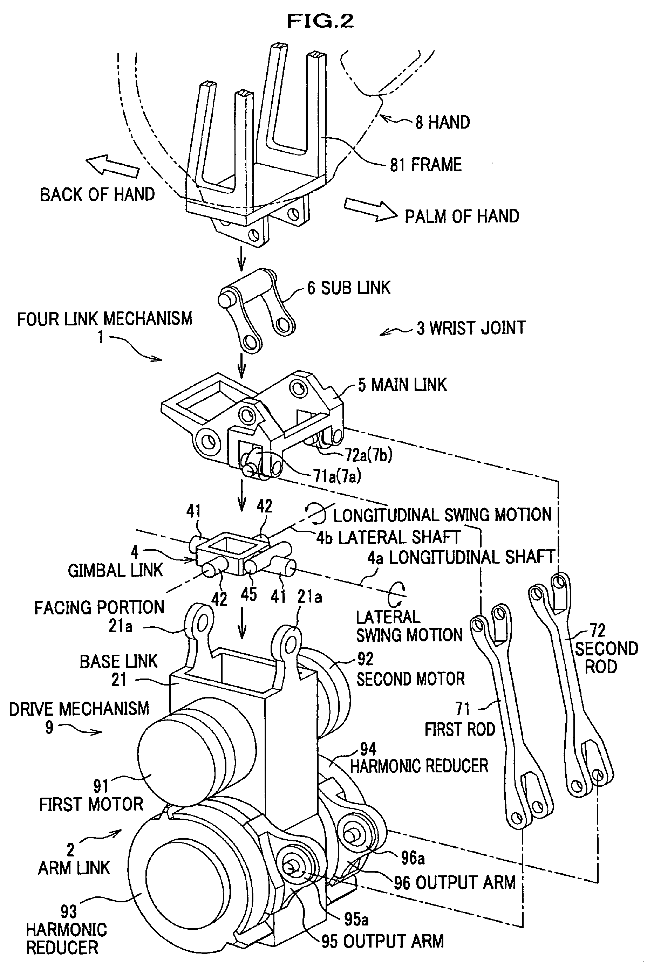

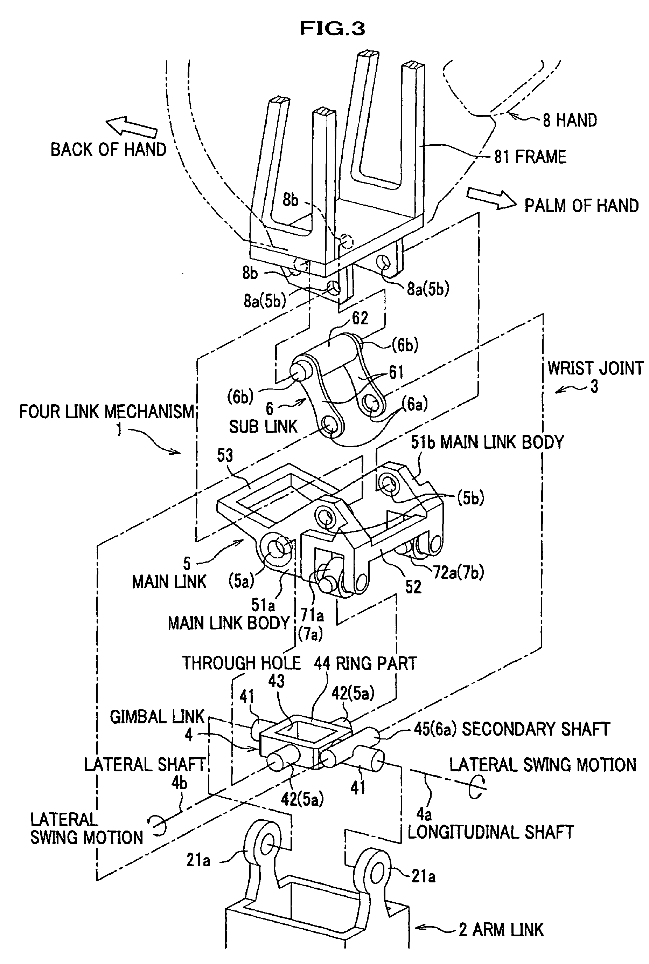

More specifically, as shown in FIG. 2, the joint structure is configured such that facing portions 21a,21a formed in the arm link 2 support a longitudinal shaft portion 41 of a gimbal link 4. Thus the gimbal link 4 is freely rotatable in a direction for the lateral swing motion. The main link 5 is pivotably coupled to a lateral shaft part 42 of the gimbal link 4, and the sub link 6 is coupled to a secondary shaft 45 of the gimbal link 4. Thus the main link 5 and the sub link 6 are freely rotatable in a direction for the longitudinal swing motion. Hence, in the above configuration, the hand 8 coupled to the main link 5 and the sub link 6 are freely swingable both in the longitudinal swing motion direction and in the lateral swing motion direction (see also FIG. 3).

The arm link 2 includes a base link 21 as a base of the arm link 2, and a drive mechanism 9 attached to the base link 21. The pair of facing portions 21a,21a for rotatably supporting the longitudinal shaft portion 41 of the gimbal link 4 are formed in the base link 21.

In the present embodiment, a configuration concerning motions of the joint structure of the wrist is described, and components other than those concerning the motions, such as a control mechanism, a sensor, a harness, or the like are not shown.

The drive mechanism 9 includes a first motor 91 and a second motor 92 each as a driving source; harmonic reducers 93,94 respectively connected to the first motor 91 and the second motor 92 via respective driving belts not shown; output arms 95, 96 coupled to respective output axes of the harmonic reducers 93,94; a first rod 71 and a second rod 72, one ends of which are coupled to the output arms 95, 96 respectively via spherical joints 95a,96a, and the other ends of which are coupled to the main link 5 via respective universal joints 71a,72a. The spherical joints 95a,96a are adjustable joints having aligning functions. The universal joints 71a,72a are also adjustable joints.

In the present embodiment, a rotary drive by the motor is used. However, the present invention is not limited to this, and a linear drive by a hydraulic cylinder or a ball screw may be used.

The wrist joint 3 includes, as shown in FIG. 3, the gimbal link 4 rotatably supported by the facing portions 21a, 21a of the arm link 2; the main link 5 coupled to the lateral shaft part 42 of the gimbal link 4; and the sub link 6 provided crosswise with the main link 5.

The gimbal link 4 includes a rectangle ring part 44 provided in a middle thereof; and the longitudinal shaft portion 41 and the lateral shaft part 42, which are provided crosswise with each other and protrude from respective sides of the ring part 44.

The ring part 44 has a rectangle ring shape having a through hole 43 therein, and is provided in the middle of the gimbal link 4. The longitudinal shaft portion 41 and the lateral shaft part 42 are provided protruding from the respective opposite sides of the ring part 44 to the outside.

The longitudinal shaft portion 41 of the gimbal link 4 operates as a longitudinal shaft 4a of a rotational shaft for the lateral swing motion of the hand 8. The lateral shaft part 42 of the gimbal link 4 operates as a lateral shaft 4b of a rotational shaft for the longitudinal swing motion. Further, both ends of the longitudinal shaft portion 41 are rotatably supported by the facing portions 21a,21a of the base link 21, so that the gimbal link 4 can rotate in a direction for the lateral swing motion.

Since the through hole 43 is provided in the middle of the gimbal link 4, a harness, a hydraulic or pneumatic pipe, or the like may run through the through hole 43. Therefore, when the gimbal link 4 is rotated, the harness or the like hardly obstruct motions of the gimbal link 4, thus ensuring a wide movable angle of the joint. Further, an excessive load applied to the harness can be prevented, thus avoiding possible disconnection of the harness.

Further, the secondary shaft 45 is provided in the longitudinal shaft portion 41 of the gimbal link 4, and is provided parallel to the lateral shaft part 42. The sub link 6 to be described later is rotatably coupled to the secondary shaft 45 in a rotational direction for the longitudinal swing motion.

In the present embodiment, the gimbal link 4 is configured to have a cross shape with a through hole in the middle thereof. However, the present invention is not limited to this. The gimbal link 4 may have a disk or any other shape, as long as the gimbal link 4 has the longitudinal shaft 4a as the rotational shaft for the lateral swing motion and the lateral shaft 4b as the rotational shaft for the longitudinal swing motion.

The main link 5 is, as shown in FIG. 3, configured to be a rectangle frame member having a large through hole in the middle thereof, when viewed from above. The main link 5 includes an integral combination of a pair of main link bodies 51a,51b, which are opposing to each other and each have a triangle shaped face when viewed from a lateral side thereof; and a pair of connecting parts 52,53. The sub link 6 to be described later is coupled to the secondary shaft 45 of the gimbal link 4 inside the frame-shaped main link 5. In the above configuration, the main link 5 ensures a span for supporting the hand 8 in a direction of the lateral shaft 4b. Thus the main link 5 stably holds the hand 8 coupled thereto, while the main link 5 receives the sub link 6 inside thereof in a balanced manner.

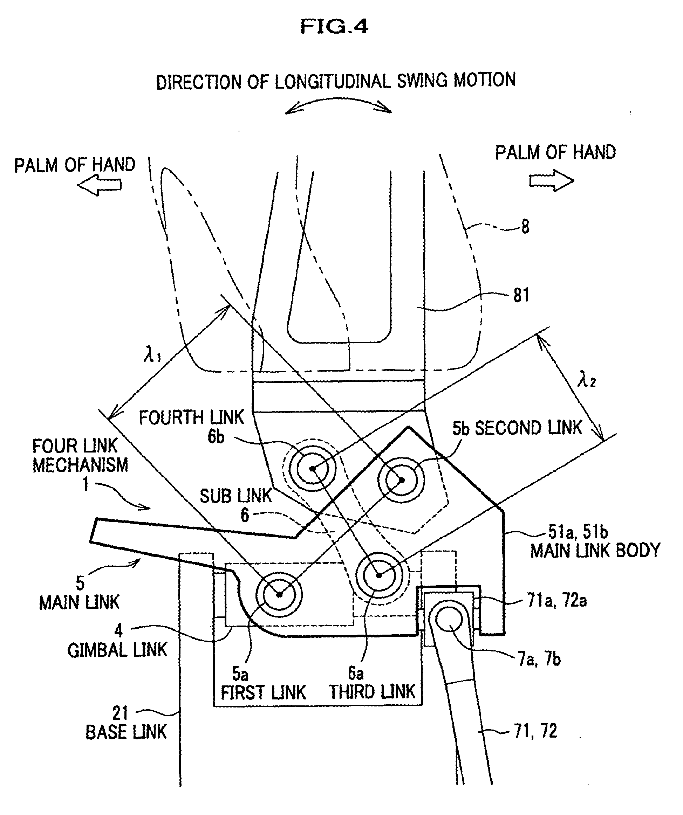

A first link 5a and a second link 5b (see FIG. 4) forming a four link mechanism 1 are provided adjacent to one sides of the respective triangle shaped faces of the main link bodies 51a,51b. The first link 5a is a part for coupling one end of the main link 5 and the lateral shaft part 42 of the gimbal link 4. The second link 5b is a part for coupling the other end of the main link 5 and a main link coupling hole 8a, which is formed in a frame 81 of the hand 8. A length between the first link 5a and the second link 5b is referred to as a link length λ₁ of the main link 5 (see FIG. 4).

Further, the first rod 71 and the second rod 72 are coupled adjacent to the other two sides of the respective triangle-shaped faces of the main link bodies 51a,51b via universal joints 71a,72a. The universal joints 71a,72a are the adjustable joints having aligning functions. A position where the first rod 71 is coupled to the main link body 51a is a first coupling point 7a (that is, a position where the universal joint 71a is provided). And a position where the second rod 72 is coupled to the main link body 51b is a second coupling point 7b (that is, a position where the universal joint 72a is provided).

The first coupling point 7a and the second coupling point 7b are disposed such that the coupling points 7a, 7b are at equal distances from the lateral shaft 4b and the longitudinal shaft 4a of the gimbal link 4, respectively; and that a line connecting the first coupling point 7a and the second coupling point 7b is parallel to the lateral shaft4b.

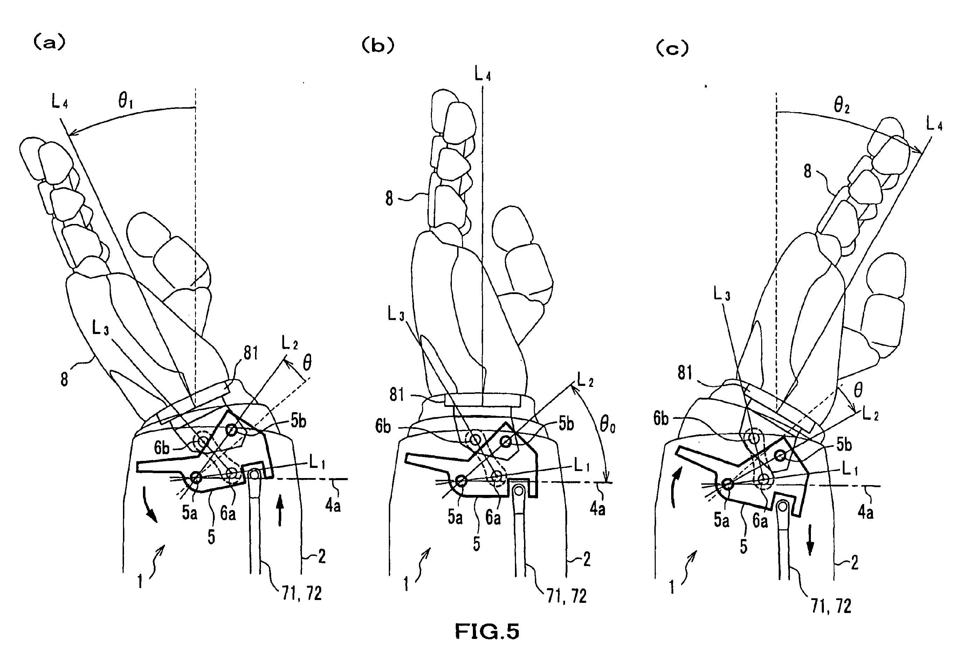

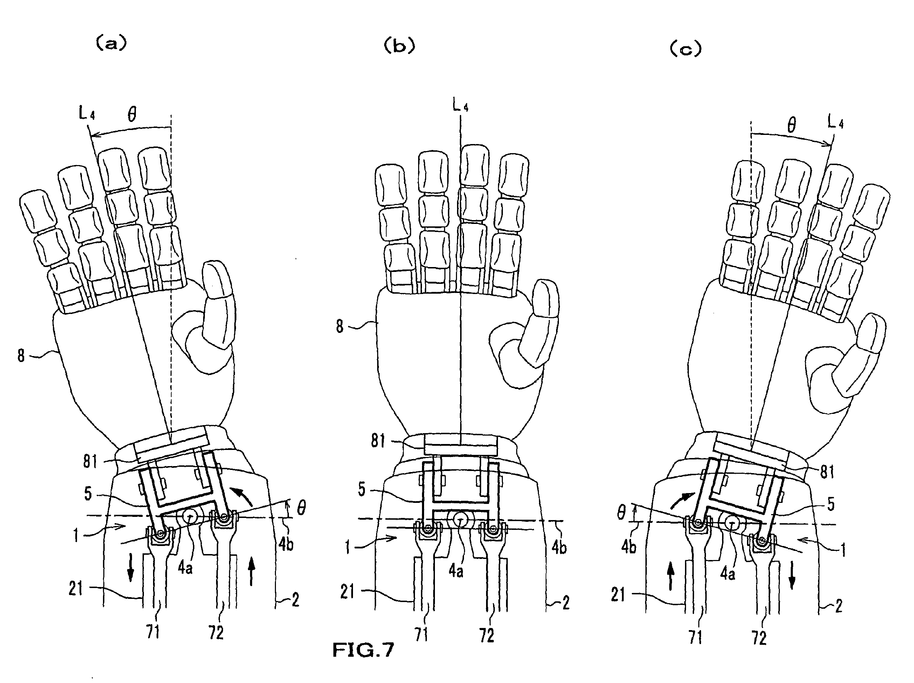

In the above configuration, the main link 5 is rotated in the longitudinal swing motion direction (see also FIG. 5) just by moving the first rod 71 and the second rod 72 forward or backward by equal distances. Additionally, the main link 5 is rotated in the lateral swing motion direction (see also FIG. 7) by moving any one of the first rod 71 and the second rod 72 forward, and moving the other backward.

In the present embodiment, the expression of the first rod 71 or the second rod 72 "moves forward" means that the first rod 71 or the second rod 72 proceeds nearer to the hand 8, when viewed from the rods 71,72. On the other hand, the expression of the first rod 71 or the second rod 72 "moves backward" means that the first rod 71 or the second rod 72 proceeds farther away from the hand 8.

The sub link 6 includes an integral combination of a pair of sub link bodies 61, 61, which are opposing to each other; and a connecting part 62. The sub link 6 is received inside the main link 5, which is configured to be the rectangle frame member and is formed with the main link bodies 51a, 51b opposing to each other and the connecting parts 52,53.

In the above configuration, the sub link 6 ensures a certain span in the direction of the lateral shaft 4b, by integrally combining the opposing sub link bodies 61, 61 and the connecting part 62. The span provides stiffness of the sub link 6 and prevents backlash, so as to stably hold the hand 8 coupled thereto.

One end of the sub link 6 is rotatably coupled to the secondary shaft 45 of the gimbal link 4, to thererby provide a third link 6a (see FIG. 4) of the four link mechanism 1. The other end of the sub link 6 is rotatably coupled to the hand 8, to thererby provide a fourth link 6b (see FIG. 4) of the four link mechanism 1. A length between the third link 6a and the fourth link 6b is referred to as a link length λ₂ of the sub link 6 (see FIG. 4).

The hand 8 includes, as shown in FIG. 2, the frame 81 as a base. The frame 81 is provided with a pair of main link coupling holes 8a, 8a rotatably coupled to the respective second links 5b,5b of the main link 5; and a pair of sub link coupling holes 8b, 8b rotatably coupled to the fourth link 6b of the sub link 6.

Next is described the four link mechanism 1 formed by the main link 5 and the sub link 6 with reference to FIG. 4. FIG. 4 is a side view for explaining the four link mechanism 1 of the joint structure of the robot according to the embodiment of the present invention.

The four link mechanism 1 includes, as shown in FIG. 4, the main link 5 for coupling the gimbal link 4 and the hand 8, and the sub link 6 provided crosswise with the main link 5. The four link mechanism 1 has the first to fourth links (5a, 5b, 6a, 6b) as coupling parts. Namely, the first link 5a is a coupling part between the main link 5 and the gimbal link 4, and is a rotational shaft for rotating the main link 5 in the longitudinal swing motion direction. The second link 5b is a coupling part between the main link 5 and the frame 81 of the hand 8 on the palm side. The third link 6a is a coupling part between the sub link 6 and the gimbal link 4, and is a rotational shaft for rotating the sub link 6 in the longitudinal swing motion direction. The fourth link 6b is a coupling part between the sub link 6 and the frame 81 of the hand 8 on the back side.

More specifically, one end of the main link 5 is coupled to the lateral shaft part 42 of the gimbal link 4 at the first link 5a. The other end of the sub link 6 is coupled to the main link coupling hole 8a (see FIG. 3) of the frame 81 of the hand 8 at the second link 5b.

Meanwhile, one end of the sub link 6 is coupled to the secondary shaft 45 of the gimbal link 4 at the third link 6a. The other end of the sub link 6 is coupled to the sub link coupling hole 8b (see FIG. 3) of the frame 81 of the hand 8 at the fourth link 6b. Hence the sub link 6 is coupled to the hand 8 such that a line connecting the third link 6a and the fourth link 6b of the sub link 6 intersects with another line connecting the first link 5a and the second link 5b of the main link 5.

In the present embodiment, the second link 5b is coupled to the frame 81 of the hand 8 on the palm side, and the fourth link 6b is coupled to the frame_81 of the hand 8 on the back side. This means that a relative position between the second link 5b and the fourth link 6b determines a swing angle (a tilt angle) of the hand 8.

Additionally, the link length λ₁ of the main link 5 is configured to be greater than the link length λ₂ of the sub link 6. The link length λ₁ of the main link 5 is longer than the link length λ₂ of the sub link 6, because wide rotational ranges of the main link 5 and the sub link 6 can be ensured in their rotational motions.

As shown in FIG. 4, the first rod 71 and the second rod 72 are coupled to the main link 5 via the respective universal joints 71a, 72a having the aligning functions (see also FIG. 2). The position at which the first rod 71 is coupled to the main link body 51a is the first coupling point 7a, and the position at which the second rod 72 is coupled to the main link body 51b is the second coupling point 7b.

The first coupling point 7a and the second coupling point 7b are configured such that they are at equal distances from the lateral shaft 4b and the longitudinal shaft 4a of the gimbal link 4, respectively, and that the line connecting the first coupling point 7a and the second coupling point 7b is parallel to the lateral shaft 4b.

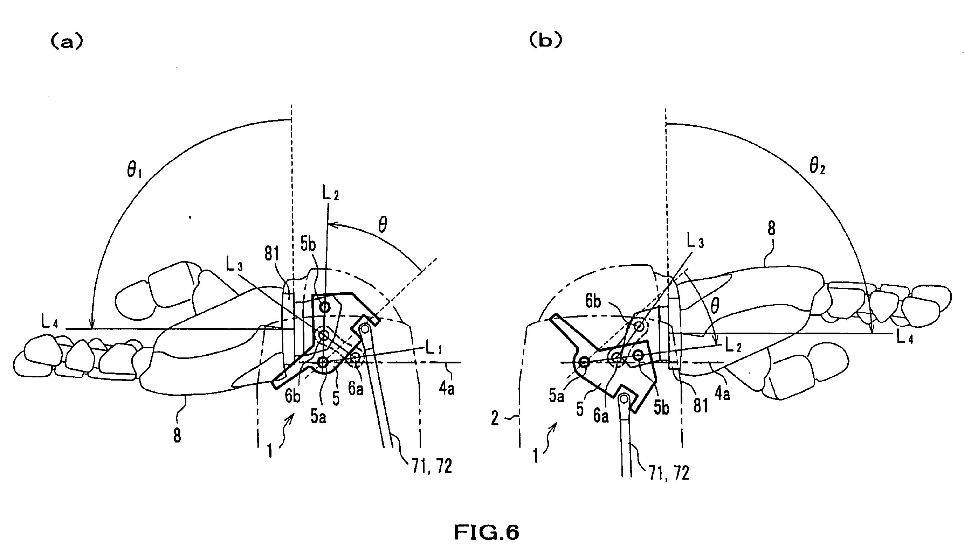

Thus, for example, in FIG. 2, if the first rod 71 is moved forward, a moment about the lateral shaft 4b acts to move the hand 8 toward the back side thereof, and another moment about the longitudinal shaft 4a acts to move the hand 8 in the clockwise direction (see FIG. 6 (c)). On the other hand, if the second rod 72 is moved forward, a moment about the lateral shaft 4b acts to move the hand 8 also toward the back side thereof, and another moment about the longitudinal shaft 4a acts to move the hand 8 in the counterclockwise direction (see FIG. 6(a)).

Hence, if the first rod 71 and the second rod 72 are moved forward by equal distances, the main link 5 can be rotated toward the back of the hand 8 in the longitudinal swing motion direction. If the first rod 71 and the second rod 72 are moved backward by equal distances, the main link 5 can be rotated toward the palm side in the longitudinal swing motion direction.

Further, if the first rod 71 is moved forward and the second rod 72 is moved backward, the main link 5 can be rotated clockwise in the lateral swing motion direction (see FIG. 6(c)). If the first rod 71 is moved backward and the second rod 72 is moved forward, the main link 5 can be rotated counterclockwise in the lateral swing motion direction (see FIG. 6(a)).

As described above, the longitudinal swing motion and the lateral swing motion are performed by moving the first rod 71 and the second rod 72 forward or backward. A first motor 91 and a second motor 92 drive the first rod 71 and the second rod 72, respectively and independently. The two motors are coordinated to perform the longitudinal swing motion and the lateral swing motion, so that the motors as well as the joint structure of a robot can be downsized. Further, the motions in the longitudinal swing direction and the lateral swing direction can be performed just by coordinating and synchronizing the first rod 71 and the second rod 72. This ensures smooth and easily controllable motions.

Next are described the motions of the joint structure of the wrist of the humanoid robot according to the embodiment of the present invention, focusing functions of the four link mechanism 1 with reference to FIG. 5 to FIG. 7. FIG. 5 is side views each for explaining the longitudinal swing motion in the four link mechanism 1 according to the embodiment of the present invention. FIG. (a) shows a state where a hand is swung toward the back of the hand. FIG. (b) shows a state where the hand is straight with respect to the arm link. FIG. (c) shows a state where the hand is swung toward the palm of the hand. FIG. 6 is side views each showing the hand which is swung 90 degrees from the state of FIG. 5. FIG. (a) is a state where the hand is swung toward the back of the hand. FIG. (b) is a state where the hand is swung toward the palm of the hand.

The longitudinal swing motion is described next with reference to FIG. 5.

Herein, a line connecting the first link 5a and the third link 6a is referred to as a base line L₁. A line connecting the first link 5a and the second link 5b is referred to as a main link line L₂. A line connecting the third link 6a and the fourth link 6b is referred to as a sub link L₃. And a central axis line of the hand 8 is referred to as L₄. An angle made by the main link line L₂ with respect to the longitudinal shaft 4a of the gimbal link 4 (see FIG. 2) is θ₀, in a state where the hand 8 is straight to the arm link 2 as shown in FIG. 5(b).

In FIG. 5 (a), (b) and (c), the first link 5a and the third link 6a are coupled to the gimbal link 4 (see FIG. 2). Therefore, the base line L₁ connecting the first link 5a and the third link 6a is not moved with respect to the longitudinal swing motion direction (see FIG. 1). A relative position therebetween is constant in each of the figures.

Starting from the state where the hand 8 is straight to the arm link 2 as shown in FIG. 5(b), the first rod 71 and the second rod 72 are moved forward by equal distances to rotate the main link 5 about the first link 5a toward the back of the hand 8 (in a counterclockwise direction) by an angle of θ. Thereby the second link 5b of the main link 5 is also rotated toward the back of the hand 8. Following the rotation, the fourth link 6b of the sub link 6 is also rotated about the third link 6a toward the back of the hand 8.

Then the second link 5b of the main link 5 is rotated to move upward with respect to the plane of the figure, while the fourth link 6b of the sub link 6 is rotated to move downward. This makes the tilt angle of the hand larger. Consequently, as shown in FIG. 5 (a), a swing speed of the hand 8 is increased, to thereby swing the hand 8 toward the back side thereof by an angle of θ₁, which is greater than θ.

That is, in the direction for the longitudinal swing motion, the swing angle θ₁ of the hand 8 is greater than the rotational angle θ of the main link 5. Even with a slight rotation of the main link 5, the hand 8 is tilted to a great degree.

Since the rotational angle of the main link 5 is minimized, and interference with the internal components accompanied by the rotational motion of the main link 5 is prevented, a compact joint structure of the wrist can be realized, while ensuring a wide swing angle of the hand 8. Further, a swing speed of the hand 8 during its swing motion is increased in its swing direction, the hand 8 is further tilted in the same direction. This contributes to not only quick motion and response of the hand 8, but also a compact joint structure of the wrist, while ensuring a wide swing angle of the hand 8.

For example, FIG. 6 shows the state where the hand 8 is tilted to an angle of 90 degrees, like a human wrist. When the hand 8 is tilted toward its back, θ is 46 degrees (see FIG. 6(a)). When the hand 8 is tilted toward its palm, θ is 32 degrees (see FIG. 6(b)). Namely, the rotational angle of the main link 5 is smaller than the tilt angle of the hand 8. It is to be noted that a relation between the tilt angle of the hand 8 and the rotational angle of the main link 5 shown above is just an example. The relation can be modified according to where a robot link is applied to.

Similarly to the above-mentioned, starting from the state where the hand 8 is straight to the arm link 2 as shown in FIG. 5(b), the first rod 71 and the second rod 72 are moved backward to pivot the main link 5 about the first link 5a toward the palm of the hand 8 (in a clockwise direction with respect to the plane of the figure) by an angle of θ. Thereby, as shown in FIG. 5(c), the swing speed of the hand 8 is increased to swing toward its back by an angle of θ₂, which is greater than θ₁.

It is to be noted that θ₂ is greater than θ₁, because the link length λ₁ of the main link 5 is configured to be greater than the link length λ₂ of the sub link 6 (see FIG. 4).

Next is described the lateral swing motion with reference to FIG. 6.

FIG. 7 is plan views each for explaining the lateral swing motion in the four link mechanism according to the embodiment of the present invention. FIG. (a) shows a state where the hand is swung in the counterclockwise direction with respect to the plane of the figure. FIG. (b) shows a state where the hand is straight with respect to the arm link. FIG. (c) shows a state where the hand is swung in the clockwise direction.

Herein, the central axis line L₄ of the hand 8 is orthogonal to the lateral shaft 4b of the gimbal link 4 (see FIG. 2), in the state where the hand 8 is straight to the arm link 2 as shown in FIG. 7(b).

Starting from the state where the hand 8 is straight to the arm link 2 as shown in FIG. 7(b), the first rod 71 and the second rod 72 are moved backward and forward respectively, by equal distances to rotate the main link 5 about the longitudinal shaft 4a of the gimbal link 4 counterclockwise with respect to the plane of the figure by an angle of θ. Thereby the hand 8 is also swung toward the same direction by the same angle of θ.

Similarly, starting from the state where the hand 8 is straight to the arm link 2 as shown in FIG. 7 (b), the first rod 71 and the second rod 72 are moved forward and backward, respectively, by equal distances to pivot the main link 5 about the longitudinal shaft 4a of the gimbal link 4 clockwise with respect to the plane of the figure by an angle of θ. Thereby the hand 8 is also swung toward the same direction by the same angle of θ, as shown in FIG. 7(c). At this time, in the lateral swing motion direction, the rotational angle θ shown in FIG. 7(c) is equal to the rotational angle θ shown in FIG. 7(a).

Next is described a combination of the longitudinal swing motion and the lateral swing motion with reference to FIG. 4 and FIG. 5.

As described above, when the first rod 71 and the second rod 72 are moved forward or backward by equal distances, the longitudinal swing motion of the hand 8 can be performed (see FIG. 4). And, when the first rod 71 is moved forward or backward by a predetermined distance, and the second rod 72 is moved backward or forward by the same distance, the lateral swing motion can be performed (see FIG. 5). Therefore, a combination of the longitudinal swing motion and the lateral swing motion of the hand 8 makes it possible to freely move the hand 8 in an oblique direction with respect to the longitudinal shaft 4a and the lateral shaft 4b, or in a circle.

The embodiment of the present invention has been explained as aforementioned. However, the embodiment of the present invention is not limited thereto, and those skilled in the art can make various modifications to the present invention according to the necessity.

For example, in the embodiment, the longitudinal shaft serving as the first rotational shaft and the lateral shaft serving as the second rotational shaft are provided orthogonally to each other. However, the first rotational shaft (longitudinal shaft) and the second rotational shaft (lateral shaft) may just intersect with each other when viewed from above. In this case, the longitudinal swing motion and the lateral swing motion of the hand 8 can be performed by suitably adjusting traveling distances of the first rod 71 and the second rod 72. Further, if the longitudinal swing motion and the lateral swing motion of the hand 8 are combined suitably, the hand 8 can be freely moved in an oblique direction with respect to the longitudinal shaft 4a and the lateral shaft 4b, or in a circle.

In the embodiment, the four link mechanism 1 is configured in a direction for the longitudinal swing motion, however, the present invention is not limited thereto. The four link mechanism 1 may be configured in a direction for the lateral swing motion.

In the embodiment, the first rod 71 and the second rod 72 (see FIG. 2) are coupled to the main link 5, in the different positions from the lateral shaft 4b, but in the positions parallel to the lateral shaft 4b and on both sides of the longitudinal shaft 4a. However, the present invention is not limited thereto. The first rod 71 and the second rod 72 may be coupled to the main link 5, in the different positions from the longitudinal shaft 4a, but in positions parallel to the longitudinal shaft 4a and on both sides of the lateral shaft 4b.

More specifically, in FIG. 3, in the embodiment, the first rod 71 and the second rod 72 are coupled to the main link bodies 51a,51b, respectively, across the longitudinal shaft 4a. However, the first rod 71 and the second rod 72 may be coupled to the connecting parts 52,53, respectively, of the main link body 51a (or the main link body 51b), across the lateral shaft4b. With the above-mentioned change in arrangement of the first rod 71 and the second rod 72, the first motor 91, the second motor 92, or the like of the drive mechanism 9 may be arranged differently.

In the above configuration, when the first rod 71 and the second rod 72 are moved forward or backward by equal distances, the main link 5 is rotated in the lateral swing motion direction (see FIG. 7). And, when any one of the first rod 71 and the second rod 72 is moved forward or backward, and the other is moved backward or forward, the main link 5 is rotated in the longitudinal swing motion direction (see FIG. 5).

In the embodiment, the universal joints 71a,72a each having two degrees of freedom are used for coupling the first rod 71 and the second rod 72, respectively, to the main link 5. And, spherical joints 95a, 96a each having three degrees of freedom are used for coupling the first rod 71 and the second rod 72 to the output arms 95,96, respectively. However, the present invention is not limited thereto. Instead, the spherical joints may be used at the main link 5, and universal joints may be used at the output arms 95,96. In both cases, the spherical joints may be used, because a force in a twisting direction acts on the first rod 71 and the second rod 72 during their rotational motions.

If the universal joints are used both at the main link 5 and the output arm 95, 95, an additional member for allowing the twisting force to escape is required. On the other hand, if the spherical joints are used at the both, an additional means for restricting an unintentional movement of the first rod 71 and the second rod 72 is required.

## Claims

1. A joint structure of a robot for performing a longitudinal swing motion and a lateral swing motion of a coupled body (8) coupled to a robot link (2), using a drive mechanism (9), with respect to the robot link (2), the robot link (2) being for use in a joint (3) of the robot, the joint structure comprising:
a base link (21) as a main body of the robot link (2) having a pair of facing portions (21a);
a gimbal link (4) having a first rotational shaft (4a) and a second rotational shaft (4b) which are not parallel to each other so as to provide the longitudinal swing motion and the lateral swing motion of the coupled body (8), the first rotational shaft (4a) being supported between the pair of facing portions (21a);
a main link (5) with one end thereof coupled to the second rotational shaft (4b) of the gimbal link (4) and with the other end thereof coupled to the coupled body (8); and
a sub link (6) with one end thereof coupled to the gimbal link (4) and with the other end thereof coupled to the coupled body (8), the sub link (6) being provided crosswise with the main link (5) to form a four link mechanism therewith.

2. The joint structure of the robot according to Claim 1,
wherein the first rotational shaft (4a) is a longitudinal shaft serving as a rotational shaft for the lateral swing motion of the coupled body (8), and
wherein the second rotational shaft (4b) is a lateral shaft serving as a rotational shaft for the longitudinal swing motion of the coupled body (8), and is provided along a direction orthogonal to the longitudinal shaft.

3. The joint structure of the robot according to Claim 2,
wherein the robot is a humanoid robot;
wherein the robot link (2) is a link of an arm between an elbow and a wrist of the humanoid robot;
wherein the coupled body (8) is a hand between the wrist and finger tips of the humanoid robot; and
wherein a swing direction of the longitudinal swing motion is a direction in which a palm of the hand and a back of the hand are faced.

4. The joint structure of the robot according to Claim 3,
wherein the main link (5) is longer than the sub link (6), and
wherein the hand (8) is coupled to the arm link (2), such that the main link (5) is fixed to a palm side of the hand, and the sub link (6) is fixed to a back side of the hand.

5. The joint structure of the robot according to Claim 4,
wherein the main link (5) spans both sides of the lateral shaft (4b);
wherein a first rod (71) and a second rod (72) which pivot the main link (5) in a direction for the longitudinal swing motion and in a direction for the lateral swing motion are coupled to the main link (5) via adjustable joints (71a, 72a);
wherein the first rod (71) is coupled to the main link (5) in a different position from the lateral shaft (4b), and, on one side of the lateral shaft (4b), in a different position from the longitudinal shaft (4a); and
wherein the second rod (72) is coupled to the main link (5) in the different position from the lateral shaft (4b), and, on the other side of the longitudinal shaft (4a), in the different position from the longitudinal shaft.

6. The joint structure of the robot according to Claim 4,
wherein the main link (5) spans both sides of the lateral shaft (4b);
wherein a first rod (71) and a second rod (72) which pivot the main link in a direction for the longitudinal swing motion and in a direction for the lateral swing motion are coupled to the main link (5) via adjustable joints (71a, 72a);
wherein the first rod (71) is coupled to the main link (5) in a different position from the longitudinal shaft (4a), and, on one side of the lateral shaft (4b), in a different position from the lateral shaft (4b); and
wherein the second rod (72) is coupled to the main link (5) in the different position from the longitudinal shaft (4a); and, on the other side of the lateral shaft (4b), in the different position from the lateral shaft (4b).

7. The joint structure of the robot according to Claim 5 or 6,
wherein a line connecting a first coupling point, at which the first rod (71) is coupled to the main link (5), and a second coupling point, at which the second rod (72) is coupled to the main link (5), is parallel to the longitudinal shaft (4a) or the lateral shaft (4b); and
wherein the first coupling point and the second coupling point are at equal distances from the longitudinal shaft (4a) and the lateral shaft (4b); respectively.

8. The joint structure of the robot according to Claim 7,
wherein the gimbal link (4) has a longitudinal shaft portion (41) serving as the longitudinal shaft (4a) and a lateral shaft portion (42) serving as the lateral shaft (4b); has the longitudinal shaft portion (41) and the lateral shaft portion (42) being provided with each other in a cross shape; and has a ring portion (44) with a through hole (43), in a middle portion in the cross shape, the longitudinal shaft portion (41) and the lateral shaft portion (42) protruding each to an outside of the ring portion (44).

9. The joint structure of the robot according to Claim 8, wherein an other end of the first rod (71) is coupled to a first motor (91) included in the drive mechanism (9) via an adjustable joint (95a), and an other end of the second rod (72) is coupled to a second motor (92) included in the drive mechanism via an adjustable joint (96a).

10. The joint structure of the robot according to claim 9,
wherein the hand is coupled to the arm link (2), such that a plane formed by the palm of the hand is substantially parallel to a plane formed by the first rod (71) and the second rod (72), in a position where the hand is straight with respect to the arm link (2).

## Patentansprüche

1. Gelenkstruktur eines Roboters zum Durchführen einer Schwingbewegung in Längsrichtung und einer Schwingbewegung in seitlicher Richtung eines an eine Roboterverbindung (2) gekoppelten, gekoppelten Körpers (8) bezüglich der Roboterverbindung (2) unter Verwendung eines Antriebsmechanismus (9), wobei die Roboterverbindung (2) zur Verwendung in einem Gelenk (3) des Roboters bestimmt ist, wobei die Gelenkstruktur umfasst:
eine ein Paar von einander zugewandten Abschnitten (21 a) aufweisende Basisverbindung (21) als einen Hauptkörper der Roboterverbindung (2);
eine Kardanverbindung (4), die eine erste Drehwelle (4a) und ein zweite Drehwelle (4b) aufweist, die zueinander nicht parallel sind, um **dadurch** die Schwingbewegung in Längsrichtung und die Schwingbewegung in seitlicher Richtung des gekoppelten Körpers (8) vorzusehen, wobei die erste Drehwelle (4a) zwischen dem Paar von einander zugewandten Abschnitten (21 a) gehaltert ist;
eine Hauptverbindung (5), deren eines Ende an die zweite Drehwelle (4b) der Kardanverbindung (4) gekoppelt ist und deren anderes Ende an den gekoppelten Körper (8) gekoppelt ist; und
eine Hilfsverbindung (6), deren eines Ende an die Kardanverbindung (4) gekoppelt ist und deren anderes Ende an den gekoppelten Körper (8) gekoppelt ist,
wobei die Hilfsverbindung (6) quer zur Hauptverbindung (5) verlaufend vorgesehen ist, um mit dieser einen Vierfachverbindungsmechanismus zu bilden.

2. Gelenkstruktur des Roboters gemäß Anspruch 1,
wobei die erste Drehwelle (4a) eine in Längsrichtung verlaufende Welle ist, die als Drehwelle für die Schwingbewegung in seitlicher Richtung des gekoppelten Körpers (8) dient, und
wobei die zweite Drehwelle (4b) eine in seitlicher Richtung verlaufende Welle ist, die als Drehwelle für die Schwingbewegung in Längsrichtung des gekoppelten Körpers (8) dient und die entlang einer zu der in Längsrichtung verlaufenden Welle orthogonal verlaufenden Richtung vorgesehen ist.

3. Gelenkstruktur des Roboters gemäß Anspruch 2,
wobei der Roboter ein humanoider Roboter ist;
wobei die Roboterverbindung (2) eine zwischen einem Ellbogen und einem Handgelenk des humanoiden Roboters vorhandene Armverbindung ist;
wobei der gekoppelte Körper (8) eine zwischen dem Handgelenk und den Fingerspitzen des humanoiden Roboters vorhandene Hand ist; und
wobei eine Schwingrichtung der Schwingbewegung in Längsrichtung eine Richtung ist, in welcher eine Handfläche und ein Handrücken einander zugewandt sind.

4. Gelenkstruktur des Roboters gemäß Anspruch 3,
wobei die Hauptverbindung (5) länger ist als die Hilfsverbindung (6); und
wobei die Hand (8) derart an die Armverbindung (2) gekoppelt ist, dass die Hauptverbindung (5) an einer Handflächenseite der Hand befestigt ist und dass die Hilfsverbindung (6) an einer Handrückenseite der Hand befestigt ist.

5. Gelenkstruktur des Roboters gemäß Anspruch 4,
wobei sich die Hauptverbindung (5) über beide Seiten der in seitlicher Richtung verlaufenden Welle (4b) erstreckt;
wobei eine erste Stange (71) und eine zweite Stange (72), welche die Hauptverbindung (5) in einer Richtung für die Schwingbewegung in Längsrichtung und in einer Richtung für die Schwingbewegung in seitlicher Richtung schwenken, über einstellbare Gelenke (71 a, 72a) an die Hauptverbindung (5) gekoppelt sind;
wobei die erste Stange (71) an einer von der in seitlicher Richtung verlaufenden Welle (4b) verschiedenen Position und auf einer Seite der in seitlicher Richtung verlaufenden Welle (4b) an einer von der in Längsrichtung verlaufenden Welle (4a) verschiedenen Position an die Hauptverbindung (5) gekoppelt ist; und
wobei die zweite Stange (72) an der von der in seitlicher Richtung verlaufenden Welle (4b) verschiedenen Position und auf der anderen Seite der in Längsrichtung verlaufenden Welle (4a) an der von der in Längsrichtung verlaufenden Welle verschiedenen Position an die Hauptverbindung (5) gekoppelt ist.

6. Gelenkstruktur des Roboters gemäß Anspruch 4,
wobei sich die Hauptverbindung (5) über beide Seiten der in seitlicher Richtung verlaufenden Welle (4b) erstreckt;
wobei eine erste Stange (71) und eine zweite Stange (72), welche die Hauptverbindung in einer Richtung für die Schwingbewegung in Längsrichtung und in einer Richtung für die Schwingbewegung in seitlicher Richtung schwenken, über einstellbare Gelenke (71a, 72a) an die Hauptverbindung (5) gekoppelt sind;
wobei die erste Stange (71) an einer von der in Längsrichtung verlaufenden Welle (4a) verschiedenen Position und auf einer Seite der in seitlicher Richtung verlaufenden Welle (4b) an einer von der in seitlicher Richtung verlaufenden Welle (4b) verschiedenen Position an die Hauptverbindung (5) gekoppelt ist; und
wobei die zweite Stange (72) an der von der in Längsrichtung verlaufenden Welle (4a) verschiedenen Position und auf der anderen Seite der in seitlicher Richtung verlaufenden Welle (4b) an der von der in seitlicher Richtung verlaufenden Welle (4b) verschiedenen Position an die Hauptverbindung (5) gekoppelt ist.

7. Gelenkstruktur des Roboters gemäß Anspruch 5 oder 6,
wobei eine Linie, die einen ersten Kopplungspunkt, an welchem die erste Stange (71) an die Hauptverbindung (5) gekoppelt ist, mit einem zweiten Kopplungspunkt, an welchem die zweite Stange (72) an die Hauptverbindung (5) gekoppelt ist, verbindet, zu der in Längsrichtung verlaufenden Welle (4a) oder zu der in seitlicher Richtung verlaufenden Welle (4b) parallel verläuft; und
wobei der erste Kopplungspunkt und der zweite Kopplungspunkt von der in Längsrichtung verlaufenden Welle (4a) bzw. der in seitlicher Richtung verlaufenden Welle (4b) gleich weit beabstandet sind.

8. Gelenkstruktur des Roboters gemäß Anspruch 7,
wobei die Kardanverbindung (4) einen Längswellenabschnitt (41) aufweist, der als die in Längsrichtung verlaufende Welle (4a) dient, und einen Querwellenabschnitt (42) aufweist, der als die in seitlicher Richtung verlaufende Welle (4b) dient; der Längswellenabschnitt (41) und der Querwellenabschnitt (42) gemeinsam in einer Kreuzform vorgesehen sind; und die Kardanverbindung (4) einen Ringabschnitt (44) aufweist, der in einem mittleren Abschnitt in der Kreuzform ein Durchgangsloch (43) aufweist, wobei sowohl der Längswellenabschnitt (41) als auch der Querwellenabschnitt (42) an einer Außenseite des Ringabschnitts (44) vorspringt.

9. Gelenkstruktur des Roboters gemäß Anspruch 8,
wobei ein anderes Ende der ersten Stange (71) über ein einstellbares Gelenk (95a) an einen im Antriebsmechanismus (9) eingeschlossenen, ersten Motor (91) gekoppelt ist und ein anderes Ende der zweiten Stange (72) über ein einstellbares Gelenk (96a) an einen im Antriebsmechanismus eingeschlossenen, zweiten Motor (92) gekoppelt ist.

10. Gelenkstruktur des Roboters gemäß Anspruch 9,
wobei die Hand derart an die Armverbindung (2) gekoppelt ist, dass eine von der Handfläche ausgebildete Ebene in einer Stellung, in welcher die Hand bezüglich der Armverbindung (2) gerade ist, zu einer von der ersten Stange (71) und der zweiten Stange (72) ausgebildeten Ebene im Wesentlichen parallel verläuft.

## Revendications

1. Structure d'articulation d'un robot pour la réalisation d'un mouvement oscillant longitudinal et d'un mouvement oscillant latéral d'un corps (8) couplé à une bielle de robot (2) en utilisant un mécanisme d'entraînement (9), par rapport à la bielle de robot (2), la bielle de robot (2) étant destinée à être utilisée dans une articulation (3) du robot, la structure d'articulation comprenant :
une bielle de base (21) servant de corps principal de la bielle de robot (2) présentant une paire de parties latérales se faisant face (21a) ;
un membre intermédiaire de cardan (4) présentant un premier arbre rotatif (4a) et un second arbre rotatif (4b) qui ne sont pas parallèles de sorte à fournir le mouvement oscillant longitudinal et le mouvement oscillant latéral du corps couplé (8), le premier arbre rotatif (4a) étant soutenu entre la paire de parties latérales se faisant face (21a) ;
une bielle principale (5), dont une extrémité est couplée au second arbre rotatif (4b) du membre intermédiaire de cardan (4) et l'autre extrémité est couplée au corps couplé (8) ; et
une sous-bielle (6), dont une extrémité est couplée au membre intermédiaire de cardan (4) et l'autre extrémité est couplée au corps couplé (8), la sous-bielle (6) étant pourvue en forme de croix de la bielle principale (5) pour former un mécanisme à quatre bielles avec celle-ci.

2. Structure d'articulation du robot selon la revendication 1,
dans laquelle le premier arbre rotatif (4a) est un arbre longitudinal servant d'arbre rotatif pour le mouvement oscillant latéral du corps couplé (8), et
dans laquelle le second arbre rotatif (4b) est un arbre latéral servant d'arbre rotatif pour le mouvement oscillant longitudinal du corps couplé (8), et est prévu le long d'une direction orthogonale à l'arbre longitudinal.

3. Structure d'articulation du robot selon la revendication 2,
dans laquelle le robot est un robot humanoïde ;
dans laquelle la bielle de robot (2) est une bielle d'un bras entre un coude et un poignet du robot humanoïde ;
dans laquelle le corps couplé (8) est une main entre le poignet et les doigts du robot humanoïde ; et
dans laquelle une direction oscillante du mouvement oscillant longitudinal est une direction,
dans laquelle une paume et un dos de la main se font face.

4. Structure d'articulation du robot selon la revendication 3,
dans laquelle la bielle principale (5) est plus longue que la sous-bielle (6), et
dans laquelle la main (8) est couplée à la bielle du bras (2) de sorte que la bielle principale (5) soit fixée à un côté de la paume de la main, et la sous-bielle (6) soit fixée à un côté du dos de la main.

5. Structure d'articulation du robot selon la revendication 4,
dans laquelle la bielle principale (5) traverse les deux côtés de l'arbre (4b) latéral ;
dans laquelle une première tige (71) et une seconde tige (72) qui pivotent la bielle principale (5) dans une direction pour le mouvement oscillant longitudinal et dans une direction pour le mouvement oscillant latéral sont couplées à la bielle principale (5) via des articulations (71a, 72a) réglables ;
dans laquelle la première tige (71) est couplée à la bielle principale (5) dans une position différente de l'arbre (4b) latéral, et, sur un côté de l'arbre latéral (4b), dans une position différente de l'arbre (4a) longitudinal ; et
dans laquelle la seconde tige (72) est couplée à la bielle principale (5) dans la position différente de l'arbre latéral (4b), et, sur l'autre côté de l'arbre longitudinal (4a), dans la position différente de l'arbre longitudinal.

6. Structure d'articulation du robot selon la revendication 4,
dans laquelle la bielle principale (5) traverse les deux côtés de l'arbre latéral (4b) ;
dans laquelle une première tige (71) et une seconde tige (72) qui pivotent la bielle principale dans une direction pour le mouvement oscillant longitudinal et dans une direction pour le mouvement oscillant latéral, sont couplées à la bielle principale (5) via des articulations (71a, 72a) réglables ;
dans laquelle la première tige (71) est couplée à la bielle principale (5) dans une position différente de l'arbre longitudinal (4a), et, sur un côté de l'arbre latéral (4b), dans une position différente de l'arbre latéral (4b) ; et
dans laquelle la seconde tige (72) est couplée à la bielle principale (5) dans la position différente de l'arbre longitudinal (4a), et, sur l'autre côté de l'arbre latéral (4b), dans la position différente de l'arbre latéral (4b).

7. Structure d'articulation du robot selon la revendication 5 ou 6,
dans laquelle un câble connectant un premier point de couplage, auquel la première tige (71) est couplée à la bielle principale (5), et un second point de couplage, auquel la seconde tige (72) est couplée à la bielle principale (5) est parallèle à l'arbre longitudinal (4a) ou l'arbre latéral (4b) ; et
dans laquelle le premier point de couplage et le second point de couplage sont respectivement à distances égales de l'arbre longitudinal (4a) et de l'arbre latéral (4b).

8. Structure d'articulation du robot selon la revendication 7,
dans laquelle le membre intermédiaire de cardan (4) présente une partie d'arbre longitudinal (41) servant d'arbre longitudinal (4a) et une partie d'arbre latéral (42) servant d'arbre latéral (4b) ; la partie d'arbre longitudinal (41) et la partie d'arbre latéral (42) étant pourvues l'une de l'autre dans une forme en croix ; et présente une partie annulaire (44) avec un trou débouchant (43), dans une partie médiane de la forme en croix, la partie d'arbre longitudinal (41) et la partie d'arbre latéral (42) faisant saillie chacune vers un côté extérieur de la partie annulaire (44).

9. Structure d'articulation du robot selon la revendication 8,
dans laquelle une autre extrémité de la première tige (71) est couplée à un premier moteur (91) compris dans le mécanisme d'entraînement (9) via une articulation réglable (95a), et une autre extrémité de la seconde tige (72) est couplée à un second moteur (92) compris dans le mécanisme d'entraînement via une articulation réglable (96a).

10. Structure d'articulation du robot selon la revendication 9,
dans laquelle la main est couplée à la bielle de bras (2) de sorte qu'un plan formé par la paume de la main soit essentiellement parallèle à un plan formé par la première tige (71) et la seconde tige (72) dans une position, dans laquelle la main est droite par rapport à la bielle de bras (2).
